# EUROPÄISCHE PATENTSCHRIFT

(11) **EP 0 640 236 B1**
(45) Veröffentlichungstag und Bekanntmachung des Hinweises auf die Patenterteilung: **21.06.2000**
(21) Anmeldenummer: 94911156.1
(22) Anmeldetag: 11.03.1994
(51) Int. Cl.: G09F 3/02, B31D 1/02

(54) **ETIKETTENBOGEN, VERFAHREN ZUR HERSTELLUNG UND VORRICHTUNG**
SHEET OF LABELS, METHOD AND DEVICE FOR ITS PRODUCTION
FEUILLE D'ETIQUETTES, PROCEDE ET DISPOSITIF PERMETTANT DE PRODUIRE UNE TELLE FEUILLE D'ETIQUETTES

(30) Priorität: 11.03.1993 DE 4307749
(43) Veröffentlichungstag der Anmeldung: 01.03.1995
(73) Patentinhaber: Avery Dennison Zweckform, Office Products Europe GmbH, 83626 Valley (DE)
(72) Erfinder: GALSTERER, Wolfgang, D-80798 München (DE); SCHLEGEL, Andreas, D-83624 Otterfing (DE); UTZ, Martin, D-81547 München (DE)
(74) Vertreter: Kindler, Matthias, Dr. Dipl.-Chem.
(86) Internationale Anmeldenummer: EP9400761
(87) Internationale Veröffentlichungsnummer: WO9420944

(56) Entgegenhaltungen:
- EP-A- 0 255 396
- EP-A- 0 377 289
- EP-A- 0 390 366
- WO-A-88/07737
- DE-A- 3 039 877
- DE-A- 4 100 154
- DE-A- 4 132 292
- DE-B- 2 212 955
- DE-C- 2 931 852
- DE-C- 3 511 717
- US-A- 2 434 128
- US-A- 3 522 136
- US-A- 4 246 058
- US-A- 4 359 358
- US-A- 4 952 433
- Zeitschrift "boss" von der Firma Herma, Juni/Juli 1992, Seite 78

## Beschreibung

Die Erfindung betrifft einen Etikettenbogen und ein Verfahren sowie eine Vorrichtung zu seiner Herstellung.

Etikettenmaterialien sind generell aus einem abhäsiven Trägermaterial, einem Haftklebstoff und einem Obermaterial aufgebaut. Sie werden hergestellt, indem man das Trägermaterial oder das Obermaterial mit dem Haftklebstoff beschichtet und anschließend eine Laminierung mit dem Obermaterial bzw. dem Trägermaterial durchführt. Der gebildete Verbund wird anschließend aufgerollt, wobei die Rollen häufig an den Seitenflächen beschnitten und ggf. auch zu schmäleren Rollen geschnitten werden.

Für die Herstellung von Etikettenbögen wird das aufgerollte Etikettenmaterial zunächst in Druckmaschinen abgerollt und gegebenenfalls bedruckt. Anschließend wird das Obermaterial und ggf. auch das Trägermaterial in einem vorbestimmten Muster gestanzt, und das ausgestanzte Obermaterial wird als Gittermatrix abgezogen. Aus dem gestanzten und gestrippten Endlosband werden die einzelnen Etikettenbögen schließlich durch Längsschnitte und Querschnitte bzw. Querperforationen und anschließendes Ablegen bzw. Abfalten und anschließendes Trennen an den Perforationslinien erhalten.

Bei der obigen Herstellung werden Schneidschritte eingesetzt, wobei ein festes Medium den Verbund aus Trägermaterial, Haftklebstoff und Obermaterial vertikal durchtrennt. Beispiele für das feste Medium sind in Bahnlaufrichtung oder quer zur Bahnlaufrichtung rotierende Messer, eine in Bahnlaufrichtung feststehende Klinge oder in Bahnlaufrichtung oszillierende Messer.

Bei diesen Schneidschritten besteht das Problem, daß das feste Schneidmedium Haftklebstoffpartikel aus den Schnittkanten herausreißen kann. Wie stark dieses Problem auftritt, hängt von der Produktionsgeschwindigkeit (Bahnlaufgeschwindigkeit), den Eigenschaften der Schichtmaterialien der Etiketten (z.B. Versprödungsneigung des Haftklebstoffes) und auch den Eigenschaften des Schneidmediums (z.B. Messerschärfe) ab. Diese aus dem Etikettenmaterial herausgerissenen Haftklebstoffpartikel bleiben dann an dem Schneidmedium und an den Schnittkanten des Etikettenmaterials kleben. Insbesondere ein am Schneidmesser anhaftender Klebstoff bewirkt einen unsauberen Schnitt, da er eine Raspelwirkung an den Etikettenbogenkanten erzeugt.

Etikettenbögen mit anhaftenden, mehr oder weniger losen Haftklebstoffpartikeln und mit unsauberen Schnittkanten sind unerwünscht, wenn sie maschinell weiterverarbeitet werden sollen, da die anhaftenden Teilchen durch vielfältige Berührung mit den entsprechenden Maschinenteilen abgestreift werden und die Weiterverarbeitungsanlage verunreinigen.

Auch wenn Etikettenbögen mit sauberen bzw. glatten Schnittkanten verarbeitet werden, tritt der obige nachteilige Effekt - wenn auch langsamer - auf. Bei der Weiterverarbeitung steht der Etikettenbogen häufig unter vertikalem Druck (z.B. beim Weitertransport) oder unter Wärmeeinwirkung (z.B. beim Bedrucken oder durch Maschinenabwärme), wodurch der Haftklebstoff über die glatten Kanten hinaus austritt bzw. ausblutet und dadurch mit den Maschinenteilen in Berührung kommt.

Besonders störend wirken Etikettenbögen mit unsauberen Schnittkanten, wenn sie über EDV-Druckmaschinen, wie Laser-, Ionen-, Magnetdrucker, Ink-Jet-Drucker, Thermo- und Transferdrucker, sowie in nach diesen Druckprinzipien arbeitenden Kopier- und Faxgeräten weiterverarbeitet bzw. bedruckt werden. Anhaftende Klebstoffpartikel kleben auf den Maschinenteilen des Transportweges, wie z.B. Transportwalzen, Separations- und Leitblechen, Greifern, Halbleitertrommeln, Fixierwalzen, fest. Nachfolgende Etikettenbögen kleben wiederum an diesen abgestreiften Haftklebstoffpartikeln und werden so in ihrem Lauf behindert. Die Folgen sind eine Verzögerung oder sogar ein Abbruch des Transports oder eine Ablenkung der Etikettenbögen von dem normalen Transportweg und damit eine Beeinträchtigung der Weiterverarbeitungsproduktivität und der Druckqualität. Haftklebstoffpartikel, die an den informationsgebenden Maschinenteilen, wie z.B. der Halbleitertrommel eines Laserdruckers, kleben, beeinträchtigen und verhindern an diesen Stellen den Druck. Aus Kunststoffen bestehende Maschinenteile, wie z.B. Fixierwalzen, oder hochempfindliche Oberflächenschichten aufweisende Teile, wie z.B. Halbleitertrommeln, werden durch die ständig beim Durchlauf von Etikettenbögen oder nachfolgende andere Druckträger, wie z.B. Kopierpapier, wirksamen Adhäsions-Reiß- und Reibungskräfte, die durch anhaftende Haftklebstoffpartikel bedingt sind, allmählich abgenutzt und beschädigt.

Um diese Nachteile zu vermeiden, wurden bislang zwei verschiedene Lösungswege verfolgt.

Gemäß der in EP-A-0 255 396 beschriebenen Lösung werden die äußeren Schnittkanten des Etikettenbogens mit einem Lack beschichtet, der nach der Aushärtung bewirkt, daß mehr oder weniger lose an den Kanten haftende Haftklebstoffpartikel gebunden werden, und daß unter den Weiterverarbeitungsbedingungen kein Haftklebstoff über die Kanten hinaus austreten bzw. ausbluten kann.

Nachteile dieses Verfahrens bestehen darin, daß ein zusätzlicher Beschichtungs- und Aushärtungsschritt erforderlich ist, das Etikettenprodukt mit zusätzlichen Chemikalien behandelt wird, was aus gesundheitlichen oder umweltbedingten Gründen unerwünscht ist, und daß bei unbeabsichtigtem Ablösen eines Randetiketts bei der Weiterverarbeitung der Effekt der Haftklebstoffaustrittsperre aufgehoben wird.

Die zweite bekannte Lösung besteht darin, den Etikettenbogen derart zu gestalten, daß das Obermaterial entlang der Schnittkanten an den Rändern in Bahnlaufrichtung jeweils um etwa 0,5 mm schmäler ist als das abhäsive Trägermaterial. Beim Lauf dieser Bögen über z.B. EDV-Drucker wird dort, wo das abhäsive Trägermaterial übersteht und an Maschinenteile, wie z.B. Leitbleche, Transportwalzen, Halbleitertrommeln und Fixierwalzen, anstößt, kein Haftklebstoff auf diese übertragen, da nur die von Haftklebstoffpartikeln freien, vorstehenden Trägermaterialkanten anstoßen.

Nachteile der nach dem obigen Verfahren hergestellten Produkte bestehen darin, daß die vorstehende Trägermaterialkante nur längs, d.h. in Bahnlaufrichtung, produziert wird, sodaß der Klebstoffaustritt und -transfer nur an zwei Kanten (Längskanten) vermieden wird, nicht aber an den beiden anderen Kanten (Querkanten) des Etikettenbogens. Dementsprechend müssen, je nachdem ob der Etikettenbogen mit der schmalen oder der breiten Seite voran durch die Weiterverarbeitungsanlage (z.B. EDV-Drucker) transportiert wird, zwei verschiedene Produkte bereitgehalten werden, da das Auftreffen der voraneilenden Kante auf eine Transportwalze, Halbleitertrommel oder eine Fixierwalze bezüglich des Haftklebstofftransfers besonders kritisch ist. Es gibt eine beträchtliche Anzahl von Kopiergeräten, die den Etikettenbogen sowohl mit der breiten als auch der schmalen Seite voran einziehen und durchführen. Laserdrucker ziehen die Etikettenbögen überwiegend mit der schmalen Seite voran ein. Kopiergeräte und Laserdrucker sind heute allgemein übliche Druck- und Vervielfältigungsgeräte im Büro und stehen häufig nebeneinander zur Anwendung, sodaß ein Einziehen des Etikettenbogens auf all diesen Geräten immer mit der gleichen Seite voran nicht möglich bzw. vorteilhaft ist.

DE-U-7243204 offenbart ein Etikettenblatt, das an einer Kante des Blattes einen Greiferrand und rechtwinklig dazu einen Anlegerand aufweist, wobei entlang dem Greifer- und dem Anlegerand ein schmaler Streifen des Unterlagepapiers über den Rand des Haftpapiers vorsteht.

Eine Aufgabe der vorliegenden Erfindung besteht somit darin, einen Etikettenbogen zu schaffen, mit dem die oben beschriebenen Nachteile, insbesondere die Übertragung von Haftklebstoffpartikeln auf die Maschinenteile einer Weiterverarbeitungsanlage, mit denen die Bogenkanten in Berührung kommen, vermieden werden, unabhängig davon, mit welcher Seite der Etikettenbogen in die Weiterveratbeitungsanlage eingezogen wird.

Eine weitere Aufgabe besteht darin, ein wirtschaftlich produktives Verfahren zur Herstellung solcher Etikettenbögen und eine dazu geeignete Vorrichtung zu schaffen.

Ein wesentlicher und kritischer Schritt bezüglich der Produktionsgeschwindigkeit (Wirtschaftlichkeit) der Verfahren zur Herstellung von Etikettenbögen ist der Matrixabzug des Obermaterials. Die herausgestanzte Matrix wird als endloses Gitterband über eine Umlenkwalze oder eine feststehende Kante so von der Bahn abgehoben, daß sie die gleiche absolute Geschwindigkeit wie die Bahn hat, die Geschwindigkeitskomponente in Bahnlaufrichtung jedoch unter der Bahngeschwindigkeit liegt. Das Gitter wird dann separat aufgewickelt. Die Umlenkwalze kann feststehend, frei drehbar oder angetrieben sein. Bei gegebenem Obermaterial und gegebener Trennkraft des Obermaterials von dem abhäsiven Trägermaterial hängt die Produktionsgeschwindigkeit entscheidend vom Winkel zwischen der Ebene des Matrixgitterbandes und der Ebene des Trägermaterials an der Abzugsstelle, der Größe und der Gleichmäßigkeit der Spannung, die auf das Matrixgitterband zwischen Abzugsstelle und Aufwicklung wirkt, und der Form der herausgestanzten Obermaterialmatrix, d.h. von der Anzahl bzw. Dichte der Längs- und Querstege pro Etikettenbogen, der Länge und Breite der Längs- und Querstege, der Art und Ausformung der Knotenpunkte von Längs- und Querstegen (rechtwinklig, vieleckig oder rund) ab.

Um eine erhöhte Produktionsgeschwindigkeit zu erreichen, die für ein wirtschaftliches Herstellverfahren erforderlich ist, wird in der Praxis die Trennkraft des Obermaterials von dem abhäsiven Trägermaterial durch Erwärmen des Etikettenmaterials vor dem Abzug des Matrixgitters reduziert, indem man z.B. die Etikettenmaterialbahn über ein elektrisch beheiztes Blech führt. Durch Erwärmen des Haftklebstoffes wird dabei gewöhnlich die Trennkraft zwischen Obermaterial und abhäsivem Trägermaterial reduziert.

Mit einem solchen Verfahren sind jedoch die Nachteile verbunden, daß die ursprünglich eingestellte Trennkraft zwischen Obermaterial und Trägermaterial nach dem Erwärmen und Wiederabkühlen verändert werden kann. Ein weiterer Nachteil ist darin zu sehen, daß die Erwärmung des Etikettenmaterials und damit die Trennkraft zwischen Obermaterial und Trägermaterial bei Schwankung der Produktionsgeschwindigkeit (Bahnlaufgeschwindigkeit) ebenfalls stark schwanken kann. Schließlich wird durch dieses Verfahren die Trennkraft an allen Stellen des Etikettenmaterials herabgesetzt, sodaß sich auch die auf dem abhäsiven Trägermaterial nach Abzug der Matrix verbleibenden Obermaterialflächen (einzelne Etiketten), besonders bei anschließenden Umlenkungen der Endlosbahn, leicht ablösen oder bei nicht vollkommen exakter Durchstanzung des Obermaterials an der Stelle der Stanzlinie bei Abzug der Matrix leicht mit angehoben werden. Weiterhin ist auch ein Nachteil darin zu sehen, daß das Verfahren bei bestimmten Etikettenprodukten nicht anwendbar ist, nämlich dann, wenn durch Erwärmen die Trennkraft zwischen Obermaterial und Trägermaterial gesteigert wird.

Ein anderes Verfahren zur Optimierung der Produktionsgeschwindigkeit hebt darauf ab, den Winkel zwischen der Abzugsebene des Matrixgitterbandes und der Bahnlaufrichtung des weitergeführten Etikettenmaterials spezifisch einzustellen, da die Größe der Trennkraft zwischen Obermaterial und Trägermaterial unter anderem auch vom Abzugswinkel abhängt. Dieses Verfahren kann noch dadurch modifiziert werden, daß das Matrixgitterband zusätzlich schräg zur Ebene der Bahnlaufrichtung des weitergeführten Etikettenmaterials, d.h. in einem bestimmten Winkel hierzu und somit zeitlich versetzt von einer Längsseite zu der anderen Längsseite des Gitters, abgezogen wird. Mit dem obigen Verfahren ist es jedoch noch nicht möglich, die Trennkraft zwischen Obermaterial und abhäsivem Trägermaterial so weit zu reduzieren und die zwischen Längs- und Querstegen des Matrixgitters beim Abzug auftretenden Spannungen so weit abzubauen, daß Matrices mit dünnen Längs- und Querstegen, insbesondere aber mit sehr dünnen Querstegen, abgezogen werden können, ohne daß diese reißen und auf dem Träger- oder Obermaterial des in Bahnlaufrichtung weitergeführten Etikettenmaterials haften bleiben, die Weiterverarbeitung somit beeinträchtigen und stören oder gar zu einem Maschinenstop führen können.

Die obige Aufgabe zur Schaffung eines wirtschaftlichen Herstellverfahrens für Etikettenbögen läßt sich somit dahingehend präzisieren, ein Verfahren zur Verfügung zu stellen, das die obigen Nachteile der bekannten Verfahren hinsichtlich des Abzugs des Matrixgitterbandes vermeidet und wirtschaftlich produktiv, d.h. mit hoher Produktionsgeschwindigkeit bzw. Bahnlaufgeschwindigkeit, durchgeführt werden kann. Weiterhin soll eine hierfür geeignete Vorrichtung bereitgestellt werden.

Die erstgenannte Aufgabe wird mittels eines Etikettenbogens aus einem Etikettenmaterial, bestehend aus abhäsivem Trägermaterial, zwischenliegender Haftklebstoffschicht und Obermaterial, gelöst, wobei die Fläche des Obermaterials derart kleiner als die des Trägermaterials ist, daß die Trägermaterialkante auf allen Seiten des Bogens über die Obermaterialkante hinaussteht, und der Abstand zwischen Trägermaterialkante und Obermaterialkante 0,1 bis 2,0 mm beträgt.

Gemäß einer bevorzugten Ausführungsform beträgt der Abstand zwischen der Trägermaterialkante und der Obermaterialkante 0,2 bis 1,0 mm.

Der Etikettenbogen ist weiterhin vorzugsweise rechteckig ausgebildet.

Gemäß einer besonderen Ausführung ist die Trägermaterialfläche und/oder die Obermaterialfläche des Etikettenbogens bedruckt, beschichtet, geschnitten, gestanzt und/oder perforiert.

Hierbei kann die Obermaterialfläche durch Schneiden, Stanzen und/oder Perforieren in einzelne Teilfächen aufgeteilt sein. Weiterhin können einzelne Teilflächen des Obermaterials des Etikettenbogens (Matrix) abgezogen sein. Eine weitere spezielle Ausführungsform sieht vor, daß das Obermaterial zwischen den einzelnen Teilfächen (Matrix) abgezogen ist.

Die oben genannten Teilflächen sind vorzugsweise dreieckig, rechteckig, quadratisch, vieleckig, rund oder oval. Bei rechteckigen und quadratischen Teilflächen weisen diese vorzugsweise rechteckige, gleichmäßig vielkantige oder runde Ecken auf.

Vorzugsweise entspricht die Fläche des Trägermaterials des Etikettenbogens DIN A0 bis DIN A6, wobei DIN A3 bis DIN A5 bevorzugt ist, und DIN A4 ganz besonders bevorzugt ist.

Das Etikettenmaterial des Etikettenbogens weist vorzugsweise ein Flächengewicht von 80 bis 300 g/m² auf, wobei ein Flächengewicht von 120 bis 200 g/m² besonders günstig ist.

Das abhäsive Trägermaterial des Etikettenbogens besteht vorzugsweise aus Papier, Karton, einer Kunststoff- oder Metallfolie oder deren Verbunde und besitzt mindestens an der dem Haftklebstoff zugewandten Seite ein Trennmittel, das vorzugsweise durch Silikon dargestellt ist.

Der Haftklebstoff für den Etikettenbogen wird bevorzugt aus Kautschuk, Poly(meth)acrylat, Polyvinylderivat oder einem Copolymer hiervon, Polyamid, Copolyamid, Polyester, Copolyester, Copolyether, Polyurethan, Polyepoxid oder Polysiloxan oder Mischungen hiervon ausgewählt.

Das Obermaterial des Etikettenbogens wird vorzugsweise durch Papier, Karton, Kunststoff- oder Metallfolien bzw. deren Verbunde dargestellt.

Ein Etikettenbogen der oben genannten Art überträgt bei der Verarbeitung auf Kopierern und EDV-Druckern keinen Haftklebstoff auf Maschinenteile, mit denen die Bogenränder in Berührung kommen, unabhängig davon, ob er mit der schmalen oder breiten Seite eingezogen und durchgeführt wird. Der erfindungsgemäße Etikettenbogen ist auch auf allen anderen Weiterverarbeitungsanlagen (z.B. Druckmaschinen) einsetzbar, unabhängig davon, mit welcher Seite er eingezogen und durchgeführt wird, ohne daß auf ein Maschinenteil Haftklebstoffpartikel übertragen werden. Weiterhin wird der Lauf nachfolgender Etikettenbögen nicht durch zurückgelassene Haftklebstoffpartikel beeinträchtigt. Der Etikettenbogen kann nach dem Durchlauf durch Kopierer, EDV-Drucker oder eine andere Weiterverarbeitungsanlage leicht abgelegt werden, er verblockt nicht im Stapel und läßt sich vom Stapel per Hand leicht separieren, da keine Verblockung durch über die Schnittkanten des Etikettenbogens ausgetretenen Haftklebstoff oder durch anhaftende Haftklebstoffpartikel erfolgt.

Die zuletzt genannte Aufgabe bezüglich eines wirtschaftlichen Herstellverfahrens für Etikettenbögen der oben genannten Art wird durch ein Verfahren gelöst, bei dem ein aus abhäsivem Trägermaterial, zwischenliegender Haftklebstoffschicht und Obermaterial aufgebautes Etikettenmaterial abgerollt, ggf. bedruckt und dann gestanzt wird, anschließend ein Matrixgitterband des Obermaterials abgezogen wird, und schließlich das verbleibende Etikettenmaterial längs und quer geschnitten bzw. quer perforiert und als Bögen abgelegt bzw. abgefaltet und dann an den Perforationslinien in einzelne Bögen getrennt wird, wobei dieses Verfahren dadurch gekennzeichnet ist, daß das Matrixgitterband aus dem Obermaterial in einem Winkel alpha = 5-90° zur Bahnlaufrichtung des weitergeführten Etikettenmaterials abgezogen wird, und die jeweils äußeren Längsstege des Matrixgitterbandes hierbei so geführt werden, daß sie senkrecht zur Laufrichtung des Matrixgitterbandes in der Ebene der abgezogenen Matrix frei beweglich sind.

Gemäß einer bevorzugten Ausführungsform wird der Winkel alpha auf einen Wert von 10-70°, und insbesondere auf einen Wert von 20-40° eingestellt.

Das Abziehen der Matrix erfolgt vorzugsweise so, daß die äußeren Längsstege über je einen Niederhalter und über eine Matrixführungswalze, die für die Einstellung des obigen Winkels alpha entsprechend zueinander positioniert werden, geführt werden.

Für den Fall, daß das Matrixgitterband innere Längsstege aufweist, werden bevorzugt zu den Niederhaltern für die äußeren Längsstege zusätzlich Niederhalter für ein oder mehrere dieser inneren Längsstege vorgesehen. Diese werden dabei vorzugsweise senkrecht unter der Matrixführungswalze auf der Etikettenmaterialbahn installiert.

Besonders vorteilhaft ist es, wenn der senkrechte Abstand zwischen der Matrixführungswalze und der Bahnlaufebene des weitergeführten Etikettenmaterials einen Wert einnimmt, der 1/10 - 5/10 der Bahnbreite des Etikettenmaterials entspricht. Bevorzugt sind hierbei Werte von 2/10 - 4/10 der Bahnbreite, und ein Bereich von 2,5/10 - 3,5/10 ist besonders günstig.

Weiterhin ist die Matrixführungswalze vorzugsweise mit einer besonders glatten Oberfläche, z.B. durch Politur oder Beschichtung, mit Kugelkäfigen oder Linearlager ausgestattet, sodaß die freie Beweglichkeit der äußeren Längsstege des Matrixgitterbandes gewährleistet wird. Als besonders günstig haben sich hierbei Linearlager erwiesen.

Eine weitere bevorzugte Ausführungsform des Verfahrens sieht vor, daß das Matrixgitterband bei seiner Führung über die Matrixführungswalze um einen Winkel beta = 5-120° aus der ursprünglichen Matrixebene abgelenkt wird.

Der obige Winkel beta wird günstigenfalls auf einen Wert von 10-90° eingestellt, wobei ein Wert von 30-70° insbesondere bevorzugt ist.

Die Ablenkung um den Winkel beta erfolgt bevorzugt durch das Zusammenspiel der Matrixführungswalze und einer Umlenkwalze, die zur Einstellung des Winkels beta entsprechend zueinander positioniert werden.

Das Matrixgitterband wird schließlich vorzugsweise mit einer Zugspannung von 1-2 N/mm über die Niederhalter, die Matrixführungswalze und die Umlenkwalze geführt.

Die für die Durchführung des obigen Verfahrens geeignete Vorrichtung umfaßt Abrollmittel für das Etikettenmaterial, ggf. Druckmaschinen, weiterhin Stanz- und Schneidwerkzeuge, ggf. Perforierungsmittel, Anlagen zur Führung des abgerollten Etikettenmaterials und des abgezogenen

Matrixgitterbandes des Obermaterials und ist gekennzeichnet durch je einen Niederhalter für die äußeren Längsstege des Matrixgitterbandes und eine Matrixführungswalze für diese Längsstege.

In einer bevorzugten Ausführungsform ist die Matrixführungswalze mit einem Linearlager ausgestattet.

Bei einer weiteren Ausgestaltung der obigen Vorrichtung sind Niederhalter für ein oder mehrere, innere Längsstege des Matrixgitterbandes vorgesehen.

Schließlich beinhaltet die Vorrichtung vorzugsweise auch eine Umlenkwalze für das Matrixgitterband.

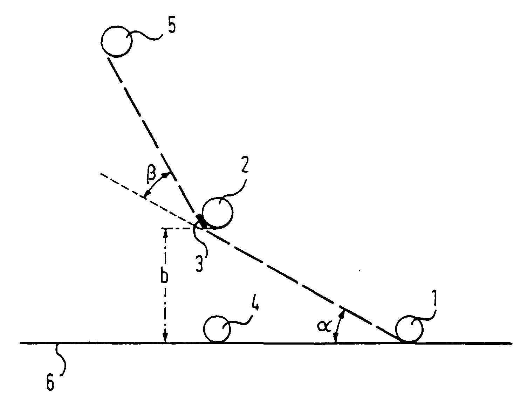

Das erfindungsgemäße Verfahren und eine geeignete Vorrichtung hierfür werden im folgenden anhand der Figur gemäß einer bevorzugten Ausführungsform näher erläutert.
- Figur:: Darstellung einer bevorzugten Ausführungsform des erfindungsgemäßen Verfahrens und einer Vorrichtung hierfür.

Bei der Herstellung des Etikettenbogens wird das Etikettenmaterial über je einen Niederhalter (1) für die äußeren Längsstege geführt, wobei das Matrixgitterband aus dem Obermaterial in einem Winkel alpha mittels der Matrixführungswalze (2) abgehoben wird. An der Matrixführungswalze (2) angebrachte Linearlager (3) ermöglichen hierbei, daß die über die Matrixführungswalze (2) geleiteten, äußeren Längsstege des Matrixgitterbandes in Richtung der Querstege des Gitters beweglich sind. Für den Fall, daß das Matrixgitterband innere Längsstege aufweist, sind senkrecht unter der Matrixführungswalze (2) für ein oder mehrere dieser Stege Niederhalter (4) vorgesehen. Die Matrixführungswalze (2) und die Bahnlaufebene (6) des weitergeführten Etikettenmaterials weisen weiterhin einen senkrechten Abstand b zueinander auf. Die Matrix wird schließlich über eine Umlenkwalze (5) um einen Winkel beta von der ursprünglichen Matrixebene abgelenkt.

Durch das beanspruchte Verfahren ist es möglich, eine übermäßige Dehnung der Querstege und eine Kerbwirkung in den Knotenpunkten von Längsstegen und Querstegen zu verhindern bzw. gering zu halten, sodaß kein Bruch des Matrixmaterials quer zur Bahnlaufrichtung auftritt. Der Abzug der Querstege erfolgt gleichzeitig von beiden Längsseiten des Etikettenmaterials fortschreitend von außen nach innen, und der Winkel zwischen weitergeführter Etikettenmaterialbahn und abgehobenem Matrirquersteg liegt über den gesamten Abzugsbereich so, daß sich eine geringe Trennkraft einstellt. Mit dem beanspruchten Verfahren ist es möglich, Produktionsgeschwindigkeiten (Bahnlaufgeschwindigkeiten) von > 100 m/min, insbesondere bis zu 200 m/min, einzustellen.

Die Erfindung wird durch das nachfolgende Beispiel näher erläutert.

### Beispiel 1

Eine 220 mm breite Rolle an Etikettenmaterial, bestehend aus weißem, holzfreien, maschinenglatten Papier (Flächengewicht 60 g/m²), transparentem, farblosen PolyacrylatHaftklebstoff (Flächengewicht 15 g/m²) und weißem, einseitig gestrichenen Silikonpapier (Flächengewicht 60 g/mm²), wobei die Trennkraft zwischen dem Silikonpapier (Trägermaterial) und dem Papier (Obermaterial) 0,10 ± 0,03 N/25 mm (Finat-Testmethode FTM3) beträgt, wird auf einer Etikettendruckmaschine zu planliegenden Etikettenbögen verarbeitet, sodaß das Trägermaterial des Etikettenbogens das Format DIN A4 annimmt.

Hierbei wird zunächst das Etikettenmaterial so passergenau durch eine rotative Stanze geführt, daß das Obermaterial im Format 296,0 x 209,0 mm herausgestanzt wird. Weiterhin erfolgt die Stanzung so, daß der Abstand zwischen zwei aufeinander folgenden Obermaterialformaten 1,0 mm beträgt.

Die um die herausgestanzten Formate hierumliegende Obermaterialmatrix wird über je einen Niederhalter (1) für die äußeren Längsstege, eine Matrixführungswalze (2) mit Linearlager (3) und eine Umlenkwalze (5) mit Winkeln alpha = 30° und beta = 60° und bei einem Abstand b = 60 mm, sowie mit einer Bahnlaufgeschwindigkeit von 150 m/min abgezogen.

Anschließend wird die weitergeführte Etikettenmaterialbahn mit in Bahnlaufrichtung rotierenden Schneidmessern links und rechts so beschnitten, daß sie eine Breite von 210,0 mm aufweist, und die linke und die rechte Trägermaterialkante je 0,5 mm über die Obermaterialkante hinausstehen.

Die seitlich beschnittene Endlosbahn wird durch einen rotativen Querschneider so passergenau geführt, daß die freiliegende Trägermaterialzone in der Mitte zwischen zwei Obermaterialformaten quer zur Bahnlaufrichtung durchtrennt wird.

Die resultierenden Etikettenbögen werden in einen Senkstapel geführt und übereinander gestapelt.

Derart hergestellte Etikettenbögen lassen unter dem Mikroskop bei 420-facher Vergrößerung keine Haftklebstoffpartikel an den äußeren Trägermaterialschnittkanten erkennen. Auch nach einem Durchlauf von 10000 solcher Etikettenbögen durch einen Laserdrucker sind unter dem Mikroskop bei 420-facher Vergrößerung keine Haftklebstoffpartikel auf den Transportwalzen und auf der Halbleitertrommel beobachtbar.

### Beispiel 2

Eine 428 mm breite Rolle an Etikettenmaterial der im Beispiel 1 genannten Art wird rotativ gestanzt, sodaß jeweils zwei nebeneinanderliegende Obermaterialformate mit je 296,0 x 209,0 mm herausgestanzt werden. Der Abstand zwischen den benachbarten Formaten beträgt 2,0 mm. Weiterhin ist der Abstand zwischen zwei in Bahnlaufrichtung aufeinander folgenden Formaten auf 1,0 mm festgelegt.

Anschließend wird die Obermaterialmatrix über je einen Niederhalter (1) für die äußeren Längsstege, eine Matrixführungswalze (2) mit Linearlager (3) für die äußeren Längsstege, einen Niederhalter (4) für den inneren Längssteg, der senkrecht unter der Matrixführungswalze (2) positioniert ist, und eine Umlenkwalze (5) abgezogen. Die Winkeleinstellung und die Bahnlaufgeschwindigkeit erfolgt gemäß Beispiel 1, der Abstand b beträgt 110 mm.

Die Etikettenmaterialbahn wird schließlich mit in Bahnlaufrichtung rotierenden Schneidmessern links, mittig und rechts und danach mit einem rotativen Querschneider in der Mitte zwischen zwei aufeinander folgenden Obermaterialformaten quer zur Bahnlaufrichtung so geschnitten, daß jeweils nebeneinander zwei Etikettenbögen des Formats 297,0 x 210,0 mm entstehen, wobei die linke und die rechte Trägermaterialkante je 1,0 mm, und die obere und die untere Trägermaterialkante je 0,5 mm über die Obermaterialkante hinausstehen.

Die mikroskopische Untersuchung gemäß Beispiel 1 läßt keine Haftklebstoffpartikel an den Trägermaterialschnittkanten und auf den Transportwalzen bzw. der Halbleitertrommel erkennen.

## Patentansprüche

1. Etikettenbogen aus einem Etikettenmaterial, bestehend aus abhäsivem Tragermaterial, zwischenliegender Haftklebstoffschicht und Obermaterial, wobei die Fläche des Obermaterials derart kleiner als die des Trägermaterials ist, daß die Trägermaterialkante auf allen Seiten des Bogens über die Obermaterialkante hinaussteht, dadurch gekennzeichnet, daß der Abstand zwischen Trägermaterialkante und Obermaterialkante 0,1 bis 2,0 mm beträgt.

2. Etikettenbogen nach Anspruch 1, dadurch **gekennzeichnet,** daß der Abstand zwischen Trägermaterialkante und Obermaterialkante 0,2 bis 1,0 mm ist.

3. Etikettenbogen nach Anspruch 1 oder 2, dadurch **gekennzeichnet,** daß er rechteckig ist.

4. Etikettenbogen nach einem oder mehreren der vorhergehenden Ansprüche, dadurch **gekennzeichnet,** daß die Trägermaterialfläche und/oder die Obermaterialfläche bedruckt, beschichtet, geschnitten, gestanzt und/oder perforiert ist.

5. Etikettenbogen nach Anspruch 4, dadurch **gekennzeichnet,** daß die Obermaterialfläche in einzelne Teilflächen aufgeteilt ist.

6. Etikettenbogen nach Anspruch 5, dadurch **gekennzeichnet,** daß einzelne Teilflächen des Obermaterials abgezogen sind.

7. Etikettenbogen nach Anspruch 5, dadurch **gekennzeichnet,** daß das Obermaterial zwischen einzelnen Teilflächen abgezogen ist.

8. Etikettenbogen nach Anspruch 5, dadurch **gekennzeichnet,** daß die Teilfläche dreieckig, rechteckig, quadratisch, vieleckig, rund oder oval ist.

9. Etikettenbogen nach Anspruch 8, dadurch **gekennzeichnet,** daß die rechteckigen oder quadratischen Teilflächen rechteckige, gleichmäßig vielkantige oder runde Ecken aufweisen.

10. Etikettenbogen nach einem oder mehreren der vorhergehenden Ansprüche, dadurch **gekennzeichnet,** daß die Fläche des Trägermaterials DIN A0 bis DIN A6 beträgt.

11. Verwendung des Etikettenbogens nach einem oder mehreren der vorhergehenden Ansprüche 1 bis 10 zum Bedrucken in EDV-Druckern.

12. Verwendung des Etikettenbogens nach einem oder mehreren der vorhergehenden Ansprüche 1 bis 10 zum Kopieren in Kopiergeräten.

13. Verfahren zur Herstellung von Etikettenbögen gemäß einem der Ansprüche 1 bis 10, bei dem ein aus abhäsivem Trägermaterial, zwischenliegender Haftklebstoffschicht und Obermaterial aufgebautes Etikettenmaterial abgerollt, ggf. bedruckt und dann gestanzt wird, anschließend ein Matrixgitterband des Obermaterials abgezogen wird, und schließlich das verbleibende Etikettenmaterial längs und quer geschnitten bzw. quer perforiert und als Bögen abgelegt bzw. abgefaltet und dann an den Perforationslinien in einzelne Bögen getrennt wird, wobei man das Matrixgitterband aus dem Obermaterial in einem Winkel alpha = 5-90° zur Bahnlaufrichtung des weitergeführten Etikettenmaterials abzieht und hierbei die jeweils äußeren Längsstege des Matrixgitterbandes so führt, daß sie senkrecht zur Laufrichtung des Matrixgitterbandes in der Ebene der abgezogenen Matrix freibeweglich sind.

14. Verfahren nach Anspruch 13, dadurch **gekennzeichnet,** daß der Winkel alpha auf einen Wert von 10-70° eingestellt wird.

15. Verfahren nach Anspruch 14, dadurch **gekennzeichnet,** daß der Winkel alpha auf einen Wert von 20-40° eingestellt wird.

16. Verfahren nach einem oder mehreren der vorhergehenden Ansprüche 13-15, dadurch **gekennzeichnet,** daß die äußeren Längsstege des Matrixgitterbandes über je einen Niederhalter (1) und über eine Matrixführungswalze (2), die zur Einstellung des Winkels alpha entsprechend zueinander positioniert werden, abgezogen werden.

17. Verfahren nach Anspruch 16, dadurch **gekennzeichnet,** daß die Matrixführungswalze (2) mit einem Linearlager (3) ausgestattet wird, das die freie Beweglichkeit der äußeren Längsstege gewährleistet.

18. Verfahren nach Anspruch 16 oder 17, dadurch **gekennzeichnet,** daß ein oder mehrere innere Längsstege des Matrixgitterbandes über Niederhalter (4) abgezogen werden.

19. Verfahren nach Anspruch 18, dadurch **gekennzeichnet,** daß der bzw. die Niederhalter (4) senkrecht unter der Matrixführungswalze (2) auf der Etikettenmaterialbahn vorgesehen wird bzw. werden.

20. Verfahren nach einem oder mehreren der Ansprüche 16-19, dadurch **gekennzeichnet,** daß der senkrechte Abstand zwischen der Matrixführungswalze (2) und der Bahnlaufebene (6) des weitergeführten Etikettenmaterials auf einen Wert eingestellt wird, der 1/10 - 5/10 der Bahnbreite des Etikettenmaterials entspricht.

21. Verfahren nach einem oder mehreren der Ansprüche 16-20, dadurch **gekennzeichnet,** daß das Matrixgitterband bei Führung über die Matrixführungswalze (2) um einen Winkel beta = 5-120° aus der ursprünglichen Matrixebene abgelenkt wird.

22. Verfahren nach Anspruch 21, dadurch **gekennzeichnet,** daß die Ablenkung über das Zusammenspiel der Matrixführungswalze (2) und einer Umlenkwalze (5), die so zueinander positioniert werden, daß der Winkel beta eingestellt wird, durchgeführt wird.

23. Verfahren nach Anspruch 22, dadurch **gekennzeichnet,** daß das Matrixgitterband über die Niederhalter (1), die Matrixführungswalze (2), ggf. den oder die Niederhalter (4) und die Umlenkwalze (5) mit einer Zugspannung von 1-2 N/mm geführt wird.

24. Vorrichtung zur Durchführung des Verfahrens gemäß einem der Ansprüche 13 bis 23, umfassend Abrollmittel für das Etikettenmaterial, ggf. Druckmaschinen, weiterhin Stanz- und Schneidwerkzeuge, ggf. Perforierungsmittel, Anlagen zur Führung des abgerollten Etikettenmaterials und des abgezogenen Matrixgitterbandes des Obermaterials, wobei sie je einen Niederhalter (1) für die äußeren Längsstege des Matrixgitterbandes und eine mit einem Linearlager (3) ausgestattete Matrixführungswalze (2) für diese Längsstege beinhaltet.

25. Vorrichtung nach Anspruch 24, dadurch **gekennzeichnet,** daß sie Niederhalter (4) für ein oder mehrere, innere Längsstege des Matrixgitterbandes umfaßt.

26. Vorrichtung nach Anspruch 24 oder 25, dadurch **gekennzeichnet,** daß sie eine Umlenkwalze (5) für das Matrixgitterband aufweist.

## Claims

1. Label sheet made of a label material, consisting of abhesive substrate material, pressure-sensitive adhesive layer in between and upper material, the surface area of the upper material being so much less than that of the substrate material that the edge of the substrate material protrudes beyond the edge of the upper material on all sides of the sheet, characterised in that the distance between edge of substrate material and edge of upper material is 0.1 to 2.0 mm.

2. Label sheet according to claim 1, characterised in that the distance between edge of substrate material and edge of upper material is 0.2 to 1.0 mm.

3. Label sheet according to claim 1 or 2, characterised in that it is rectangular.

4. Label sheet according to one or more of the preceding claims, characterised in that the surface of the substrate material and/or the surface of the upper material is printed, coated, cut, punched and/or perforated.

5. Label sheet according to claim 4, characterised in that the surface of the upper material is divided into individual partial surfaces.

6. Label sheet according to claim 5, characterised in that individual partial surfaces of the upper material are stripped.

7. Label sheet according to claim 5, characterised in that the upper material is stripped between individual partial surfaces.

8. Label sheet according to claim 5, characterised in that the partial surface is triangular, rectangular, square, polygonal, round or oval.

9. Label sheet according to claim 8, characterised in that the rectangular or square partial surfaces have rectangular, uniformly polygonal or round corners.

10. Label sheet according to one or more of the preceding claims, characterised in that the surface area of the substrate material is DIN A0 to DIN A6.

11. Use of the label sheet according to one or more of the preceding claims 1 to 10 for printing in computer printers.

12. Use of the label sheet according to one or more of the preceding claims 1 to 10 for copying in copiers.

13. Method for the manufacture of label sheets according to any of claims 1 to 10, in which a label material constructed from abhesive substrate material, pressuresensitive adhesive layer in between and upper material is unrolled, if necessary printed and then punched, then a matrix grid strip of the upper material is stripped, and lastly the remaining label material is cut longitudinally and transversely or perforated transversely and deposited or unfolded as sheets and then separated into individual sheets at the perforation lines, wherein the matrix grid strip is stripped from the upper material at an angle alpha = 5-90° to the direction of web travel of the label material which is guided further and in the process the outer longitudinal webs of the matrix grid strip are guided in such a way that they are freely movable perpendicularly to the direction of travel of the matrix grid strip in the plane of the stripped matrix.

14. Method according to claim 13, characterised in that the angle alpha is adjusted to a value of 10-70°.

15. Method according to claim 14, characterised in that the angle alpha is adjusted to a value of 20-40°.

16. Method according to one or more of the preceding claims 13-15, characterised in that the outer longitudinal webs of the matrix grid strip are stripped by means of a hold-down device (1) each and by means of a matrix guide roller (2), which are suitably positioned relative to each other to adjust the angle alpha.

17. Method according to claim 16, characterised in that the matrix guide roller (2) is equipped with a linear bearing (3) which ensures free mobility of the outer longitudinal webs.

18. Method according to claim 16 or 17, characterised in that one or more inner longitudinal webs of the matrix grid strip are stripped by means of hold-down devices (4).

19. Method according to claim 18, characterised in that the hold-down device or devices (4) is or are provided vertically under the matrix guide roller (2) on the label material web.

20. Method according to one or more of claims 16-19, characterised in that the vertical distance between the matrix guide roller (2) and the plane (6) of web travel of the label material which is guided further, is adjusted to a value which corresponds to 1/10 - 5/10 of the web width of the label material.

21. Method according to one or more of claims 16-20, characterised in that the matrix grid strip when passed over the matrix guide roller (2) is deflected through an angle beta = 5-120° out of the original matrix plane.

22. Method according to claim 21, characterised in that the deflection is carried out through coordination of the matrix guide roller (2) and a deflection roller (5), which are positioned relative to each other in such a way that the angle beta is adjusted.

23. Method according to claim 22, characterised in that the matrix grid strip is passed over the hold-down devices (1), the matrix guide roller (2), if necessary the hold-down device or devices (4) and the deflection roller (5) with a tensile stress of 1-2 N/mm.

24. Apparatus for carrying out the method according to any of claims 13 to 23, including unrolling means for the label material, if necessary printing machines, also punching and cutting tools, if necessary perforation means, systems for guiding the unrolled label material and the stripped matrix guide strip of the upper material, wherein it contains a hold-down device (1) for each of the outer longitudinal webs of the matrix grid strip and a matrix guide roller (2) equipped with a linear bearing (3) for these longitudinal webs.

25. Apparatus according to claim 24, characterised in that it includes hold-down devices (4) for one or more inner longitudinal webs of the matrix guide strip.

26. Apparatus according to claim 24 or 25, characterised in that it comprises a guide roller (5) for the matrix guide strip.

## Revendications

1. Feuille d'étiquettes, constituée d'un matériau pour étiquettes, composée d'un matériau support abhésif, d'une couche de masse auto-adhésive intercalaire et d'un matériau de dessus, l'aire de la surface du matériau de dessus étant inférieure à celle du matériau support, de manière que l'arête ou la bordure du matériau support ressorte de tous les côtés de la feuille sur l'arête du matériau de dessus, caractérisée en ce que l'espacement entre l'arête de matériau support et l'arête de matériau de dessus est de 0,1 à 2,0 mm.

2. Feuille d'étiquettes selon la revendication 1, caractérisée en ce que l'espacement entre l'arête de matériau support et l'arête de matériau de dessus est de 0,2 à 1,0 mm.

3. Feuille d'étiquettes selon la revendication 1 ou 2, caractérisée en ce qu'elle est rectangulaire.

4. Feuille d'étiquettes selon l'une ou plusieurs des revendications précédentes, caractérisée en ce que la surface de matériau support et/ou la surface de matériau de dessus est imprimée, enduite, découpée, estampée et/ou perforée.

5. Feuille d'étiquettes selon la revendication 4, caractérisée en ce que la surface de matériau de dessus est subdivisée en des surfaces partielles individuelles.

6. Feuille d'étiquettes selon la revendication 5, caractérisée en ce que des surfaces partielles individuelles du matériau de dessus sont enlevées.

7. Feuille d'étiquettes selon la revendication 5, caractérisée en ce que le matériau de dessus est enlevé entre des surfaces partielles individuelles.

8. Feuille d'étiquettes selon la revendication 5, caractérisée en ce que la surface partielle est triangulaire, rectangulaire, carrée, polygonale, ronde ou ovale.

9. Feuille d'étiquettes selon la revendication 8, caractérisée en ce que les surfaces partielles rectangulaires ou carrées présentent des angles rectangulaires, polygonaux réguliers ou arrondis.

10. Feuille d'étiquettes selon l'une ou plusieurs des revendications précédentes, caractérisée en ce que la surface du matériau support correspond à DIN A0 à DIN A6.

11. Utilisation de la feuille d'étiquettes selon l'une ou plusieurs des revendications 1 à 10 précédentes, pour l'impression dans des imprimantes de traitement de l'information.

12. Utilisation de la feuille d'étiquettes selon l'une ou plusieurs des revendications 1 à 10 précédentes, pour un copiage dans des copieuses.

13. Procédé de fabrication de feuille d'étiquettes selon l'une des revendications 1 à 10, dans lequel un matériau pour étiquette, constitué d'un matériau support abhésif, d'une couche de masse auto-adhésive intercalaire et d'un matériau de dessus, est déroulé, le cas échéant imprimé puis estampé, puis une bande à grille en matrice du matériau de dessus est extraite, et enfin le matériau d'étiquettes subsistant est découpé longitudinalement et transversalement, respectivement perforé transversalement et déposé sous forme de feuilles ou déplié et séparé au niveau des lignes de perforation, en donnant des feuilles individuelles, le matériau à grille en matrice issu du matériau de dessus est extrait sous un angle alpha = 5-90° par rapport à la direction de défilement de la bande du matériau pour étiquettes continuant à être guidé, et les nervures longitudinales extérieures de la bande à grille en matrice étant guidées de manière à ce qu'elles soient mobiles librement, perpendiculairement par rapport à la direction de défilement de la bande à grille en matrice, dans le plan de la matrice extraite.

14. Procédé selon la revendication 14, caractérisé en ce que l'angle alpha est réglé à une valeur de 10-70°.

15. Procédé selon la revendication 14, caractérisé en ce que l'angle alpha est réglé à une valeur de 20-40°.

16. Procédé selon l'une ou plusieurs des revendications 13-15 précédentes, caractérisé en ce que les nervures longitudinales extérieures de la bande à grille en matrice sont extraites chaque fois, par l'intermédiaire d'un dévétisseur (1) et par l'intermédiaire d'un rouleau de guidage de matrice (2), positionnés l'un par rapport à l'autre de manière correspondante pour obtenir le réglage de l'angle alpha.

17. Procédé selon la revendication 16, caractérisé en ce que le rouleau de guidage de matrice (2) est équipé d'un palier linéaire (3) assurant la libre mobilité des nervures longitudinales extérieures.

18. Procédé selon la revendication 16 ou 17, caractérisé en ce qu'une ou plusieurs nervures longitudinales internes de la bande à grille en matrice sont extraites par l'intermédiaire de dévétisseurs (4).

19. Procédé selon la revendication 18, caractérisé en ce que le ou les dévétisseurs (4) est/sont prévus perpendiculairement sous le rouleau de guidage de matrice (2), sur la bande de matériau pour étiquettes.

20. Procédé selon l'une ou plusieurs des revendications 16-19, caractérisé en ce que l'espacement perpendiculaire, entre le rouleau de guidage de matrice (2) et le plan de défilement de bande (6) du matériau pour étiquettes continuant à être guidé, est réglé à une valeur correspondant à 1/10 - 5/10 de la largeur de bande du matériau pour étiquettes.

21. Procédé selon l'une ou plusieurs des revendications 16-20, caractérisé en ce que, lors du guidage, la bande à grille en matrice est déviée d'un angle bêta = 5-120° par rapport au plan de matrice initiale, par le rouleau de guidage de matrice (2).

22. Procédé selon la revendication 21, caractérisé en ce que la déviation est effectuée par l'intermédiaire de la coopération entre un rouleau de guidage de matrice (2) et un rouleau déviateur (5), positionnés l'un par rapport à l'autre de manière à ce que l'angle bêta s'établisse.

23. Procédé selon la revendication 22, caractérisé en ce que la bande à grille en matrice est guidée sur les dévétisseurs (1), le rouleau de guidage de matrice (2), le cas échéant le ou les dévétisseurs (4) et le rouleau déviateur (5), avec une contrainte de traction de 1-2 N/mm.

24. Dispositif de mise en oeuvre du procédé selon l'une des revendications 13 à 23, comprenant des moyens de déroulement pour le matériau pour étiquettes, le cas échéant des machines à imprimer, en plus des outils d'estampage et de découpage, le cas échéant des moyens de perforation, des installations pour guider le matériau pour étiquettes déroulé et la bande à grille en matrice extraite du matériau de dessus, le dispositif contenant chaque fois un dévétisseur (1), pour les nervures longitudinales extérieures de la bande à grille en matrice, et un rouleau de guidage de matrice (2), équipé d'un palier linéaire (3), pour ces nervures longitudinales.

25. Dispositif selon la revendication 24, caractérisé en ce qu'il comprend des dévétisseurs (4) pour une ou plusieurs nervures longitudinales intérieures de la bande à grille en matrice.

26. Dispositif selon la revendication 24 ou 25, caractérisé en ce qu'il présente un rouleau déviateur (5) pour la bande à grille en matrice.
